# EUROPEAN PATENT SPECIFICATION

(11) **EP 1 437 268 B1**
(45) Date of publication and mention of the grant of the patent: **23.08.2006**
(21) Application number: 03104260.9
(22) Date of filing: 18.11.2003
(51) Int. Cl.: B60R 21/34, B60R 19/40, B62D 24/04, B60R 19/36, B62D 21/15

(54) **Vehicle with a movable front portion, in particular for pedestrian safety in the event of accidents**
Fahrzeug mit einem bewegbaren Vorderteil, insbesondere für die Sicherheit von Fussgängern im Fall eines Unfalles
Véhicle à portion frontale mobile, en particulier pour la securité des piétons en cas d'accident

(30) Priority: 10.01.2003 IT TO20030008
(43) Date of publication of application: 14.07.2004
(60) Divisional application: 05110789.4
(73) Proprietor: C.R.F. Società Consortile per Azioni, 10043 Orbassano (Torino) (IT)
(72) Inventor: Alacqua, Stefano, c/o C.R.F. Società Consortile, 10043 Orbassano (IT); Bochicchio de Maria, Mario c/o C.R.F. Società, 10043 Orbassano (IT); Castaldi, Michele, c/o C.R.F. Società Consortile, 10043 Orbassano (IT); Duni, Efthimio, c/o C.R.F. Società Consortile, 10043 Orbassano (IT); Francone, Giancarlo, c/o C.R.F. Società, 10043 Orbassano (IT); Gobetto, Enrico, c/o C.R.F. Società Consortile, 10043 Orbassano (IT); Mangino, Enrico, c/o C.R.F. Società Consortile, 10043 Orbassano (IT); Ostorero, Marcello, c/o C.R.F. Società Consortile, 10043 Orbassano (IT); Solinas, Maria Rita, c/o C.R.F. Società, 10043 Orbassano (IT); Storgato, Angelo, c/o C.R.F. Società Consortile, 10043 Orbassano (IT); Turco, Patrizio, c/o C.R.F. Società Consortile, 10043 Orbassano (IT); Zanella, Alessandro, c/o C.R.F. Società, 10043 Orbassano (IT)
(74) Representative: Jorio, Paolo

(56) References cited:
- DE-A- 3 238 025
- DE-A- 4 209 826
- DE-A- 4 414 432
- DE-A- 10 117 214
- DE-A- 19 738 694
- FR-A- 2 747 446
- US-A- 5 181 589
- US-B1- 6 334 518

## Description

The present invention relates in general to a vehicle with a movable front portion, and in particular to a coupling assembly for connecting a movable front portion to a fixed structure of a vehicle, especially for pedestrian safety in the event of accidents.

Vehicles are known in which the front bumper is movable longitudinally between a withdrawn position and a forward position with respect to the engine compartment, and is connected to dampers to damp, during its movement, any shock when parking.

Known solutions are not always satisfactory, on account of the dampers failing to provide for damping impact against pedestrians.

US6334518 discloses a device to absorb impact energy between a bumper bracket and the frame side rail of a vehicle according to the preamble of claim 1. The device has a deforming section to plastically absorb energy, and a hydraulic part to elastically absorb energy. The hydraulic part is before the deforming art viewed in direction of impact inside the frame side rail.

US5181589 discloses a reversible impact damper which is in series with an additionally provided irreversible deformation damper. The impact damper is a usual solid damper. The deformation damper has a deformation piston bearing against a piston rod of the impact damper on the one hand and on the other hand against crimps, which are formed in the wall of a slide tube displaceable relative to the housing of the impact damper and which are deformable.

Movement of the bumper between the forward and withdrawn positions should preferably be controlled selectively to obtain two different vehicle configurations as a function of various driving parameters, e.g. travelling speed. A further need is therefore felt to minimize the difference in the look of the vehicle in the two different driving configurations.

It is an object of the present invention to provide a coupling assembly for connecting a movable front portion to a fixed structure of a vehicle, designed to meet the above requirements in a straightforward, low-cost manner.

According to the present invention, there is provided a coupling assembly for connecting a movable front portion to a fixed structure of a vehicle; the assembly comprising:
- first shock-absorbing means exerting a first resistance to withdrawal along a first withdrawal travel portion of said front portion in a longitudinal direction with respect to said fixed structure;
- second shock-absorbing means exerting a second resistance to withdrawal, greater than said first resistance, along a second withdrawal travel portion of said front portion following said first travel portion;
- two longitudinal side members comprising respective rear sections connected to said fixed structure, and respective front sections connected integrally to a supporting cross member of said front portion and movable with respect to said rear sections;
- guide means interposed between said rear sections and said front sections to guide said supporting cross member longitudinally;
- stop means to arrest longitudinal slide of said front sections in an intermediate position between said first and said second travel portion, during said withdrawal; said stop means comprising, for each said side member, an arresting member carried by one of said front section and said rear section, and a stop member carried by the other of said front section and said rear section;
characterized in that said stop member is movable between a stop position facing said arresting member in said longitudinal direction, and a release position allowing said front section to withdraw freely; first actuating means being provided to move said stop member between the stop and release positions.

A non-limiting embodiment of the invention will be described by way of example with reference to the accompanying drawings, in which:
Figure 1 shows a side view, with parts removed for clarity, of a preferred embodiment of a vehicle with a movable front portion, in accordance with the present invention;
Figure 2 is similar to Figure 1, and shows the Figure 1 vehicle in a different driving configuration;
Figure 3 shows a view in perspective, with parts removed for clarity, of the Figure 1 vehicle;
Figure 4 shows a plan view of a detail of the Figure 3 vehicle;
Figure 5 shows a view in perspective of the bonnet of the Figure 1 vehicle;
Figure 6 shows a larger-scale section along line VI-VI in Figure 1.

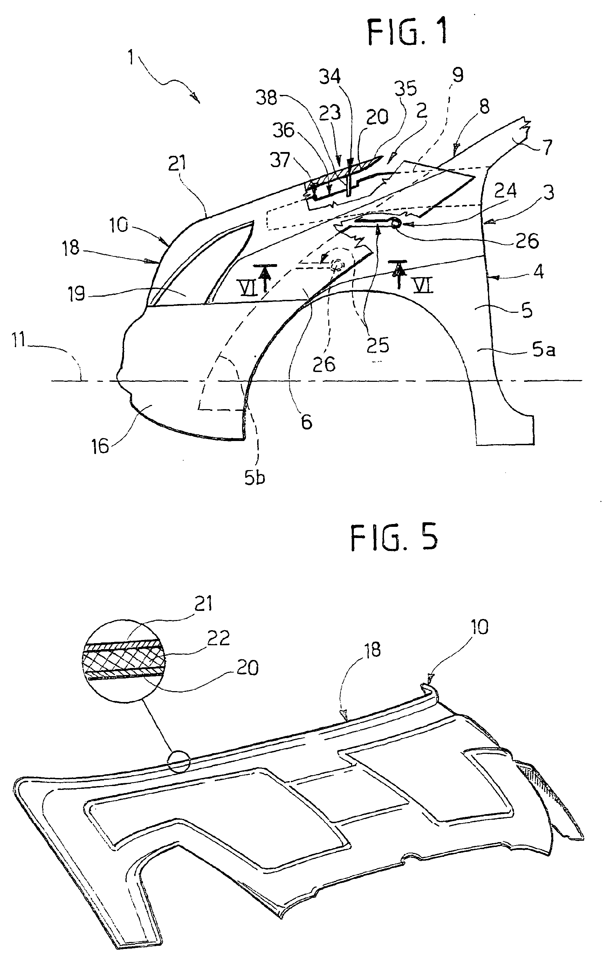

Number 1 in Figure 1 indicates as a whole a vehicle comprising a front engine compartment 2; and an outer vehicle body 3, in turn comprising two front fenders 4, which are located symmetrically on opposite sides of compartment 2, extend astride respective front wheelhouses (not shown), and comprise respective fixed portions 5 and respective movable portions 6. Portions 5 extend frontwards and downwards from respective lateral posts 7 of the windscreen of vehicle 1, and are arc-shaped so that each has a respective portion 5a defining the rear of the wheelhouse, and a respective portion 5b defining the front and top of the wheelhouse.

Portions 5 form part of a fixed structure 8 partly defining compartment 2, and comprising two supporting members or so-called top struts 9, which extend inside compartment 2, alongside fenders 4 and symmetrically with respect to a central longitudinal plane of vehicle 1. Portions 6, on the other hand, form part of a front end portion or so-called "front end" 10, which defines the front and top of compartment 2, and is movable with respect to structure 8 in a longitudinal direction 11 substantially parallel to the travelling direction of vehicle 1.

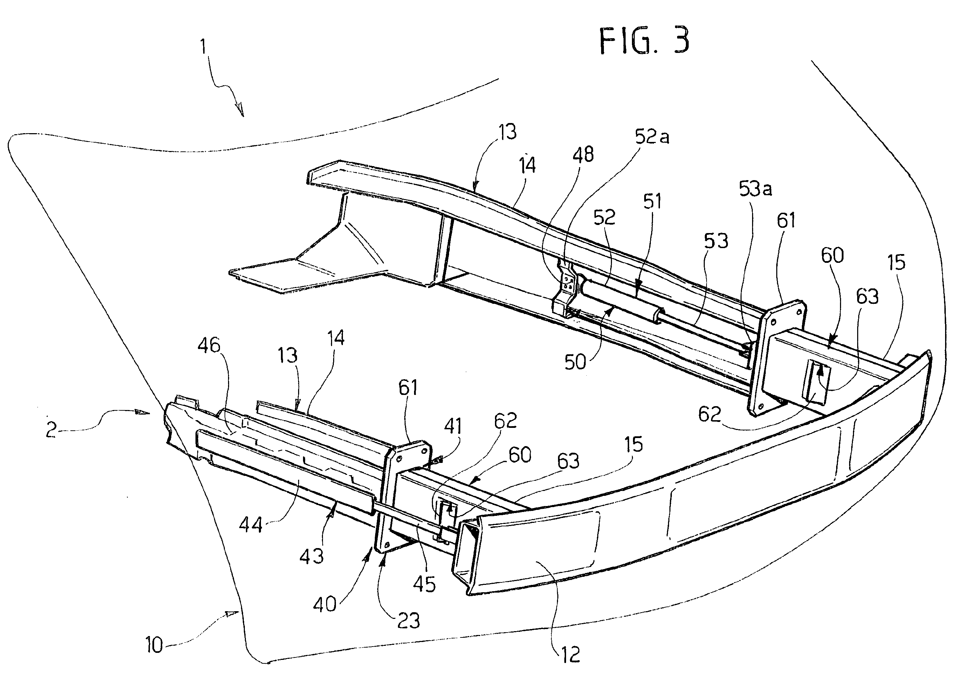

With reference to Figure 3, front end 10 comprises a front supporting cross member 12 located in front of compartment 2 and connected to structure 8 by two side members 13 symmetrical with respect to said central longitudinal plane.

Each side member 13 comprises a respective fixed rear section 14, and a respective front end section 15 movable with respect to section 14 and connected integrally to cross member 12 in known manner not described in detail.

With reference to Figures 1, 2 and 5, front end 10 also comprises a front bumper 16 carried by cross member 12; a bonnet 18; and two front optical assemblies 19 carried by cross member 12 over bumper 16 and on opposite sides of a central portion of bonnet 18. Bonnet 18, which is preferably fixed with respect to the other components of front end 10, comprises a sheet 20 or so-called "inner panel" defining the top of compartment 2, and a sheet 21 defining the outer profile of vehicle 1. The gap between sheets 20 and 21 is about 20 millimetres thick, and is filled with a layer 22 of shock-absorbing material, preferably polymer foam. Preferably, sheet 21 is made of metal, e.g. steel or aluminium, and sheet 20 of fibre-reinforced thermoplastic or thermosetting material.

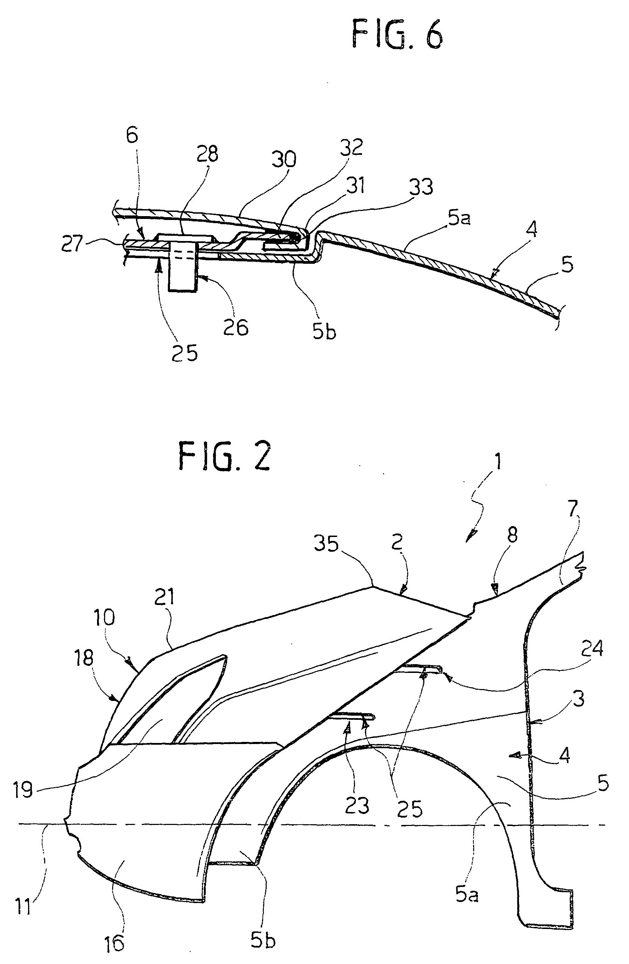

The component parts of front end 10 are connected to one another in fixed relative positions, in a manner not described in detail, so as to move as one, and are connected to structure 8 by a locating and guide assembly 23 to allow front end 10 to translate longitudinally between a withdrawn limit position (Figure 1), in which portions 6 and the rear lateral ends of bumper 16 overlap portions 5b, and a forward limit position (Figure 2), in which portions 6 and bumper 16 form a seamless extension of portions 5, and bonnet 18 and bumper 16 are distanced from the members (not shown) housed inside compartment 2.

For each fender 4, assembly 23 comprises a respective locating and guide device 24, in turn comprising two slots 25, which are formed, parallel to direction 11, in portion 5b, are spaced apart both vertically and longitudinally, are open at the front end edge of portion 5b, are preferably straight and horizontal, but may also be inclined to guide front end 10 with an upward component.

With reference to Figure 6, for each slot 25, device 24 comprises a respective transverse pin 26, which extends through a sheet 27 of portion 6 defining an extension of sheet 20, projects towards compartment 2, engages slot 25 in sliding manner, and terminates with a head 28 welded integrally to sheet 27. More specifically, portion 6 comprises an outer sheet 30, which forms an extension of sheet 21, defines the outer profile of fender 4, conceals head 28, and has an end 31 folded about an edge 32 of sheet 27 with the interposition of a layer 33 of adhesive and/or sealing material.

As shown in Figure 1, assembly 23 also comprises a locating and guide device 34 interposed between structure 8 and the free rear end 35 of bonnet 18, and which in turn comprises two longitudinal grooves 36, each formed on the top surface 37 of a respective top strut 9. For each groove 36, device 34 comprises a respective vertical pin 38, which projects towards compartment 2 from sheet 20, is connected integrally to end 35, and engages groove 36 in sliding manner. More specifically, pin 38 is connected to end 35 in the same way as pin 26 to portion 6.

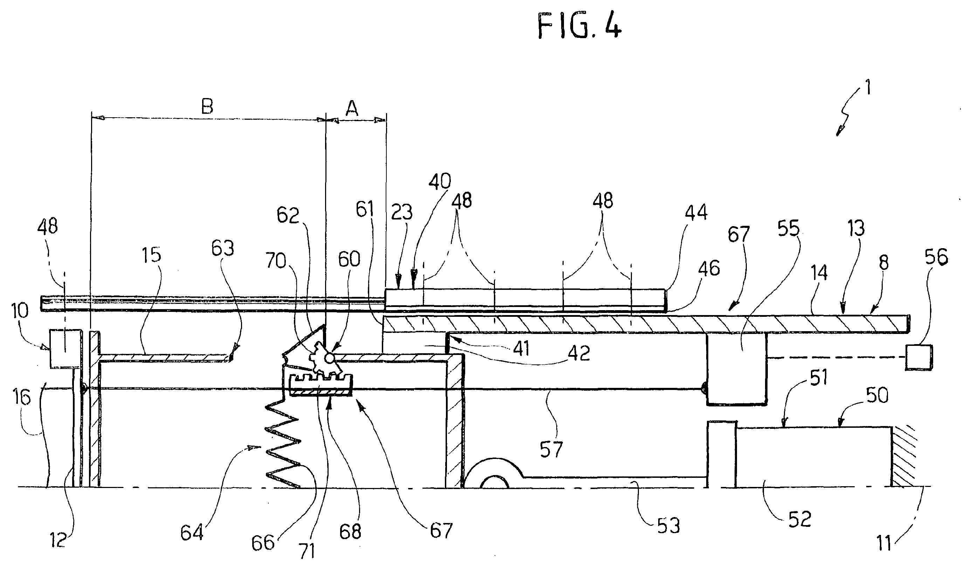

With reference to Figures 3 and 4, assembly 23 also comprises a guide device 40 interposed between front end 10 and fixed sections 14 of side members 13, and comprising a telescopic coupling 41 between sections 14 and 15. More specifically, sections 15 are connected in sliding manner to an inner surface of sections 14 with the interposition of a layer 42 (shown schematically in Figure 4) of friction-reducing material, e.g. a material known as "Teflon" (registered trademark).

Device 40 also comprises, for each side member 13, a respective additional, preferably roller-type, guide 43 located parallel to coupling 41, on the outer side of side member 13, and comprising a jacket 44 and a rod 45 connected to each other telescopically. Rod 45 is fixed to cross member 12, while jacket 44 is fixed to section 14 with the interposition of a bracket 46. More specifically, jacket 44 is fixed to bracket 46 by a number of screws 48 (shown schematically by lines in Figure 4) of the type known in slang as "sacrificial screws", which shear off automatically when the stress in direction 11 exceeds a predetermined threshold value corresponding to their shear strength.

With reference to Figure 4, front end 10 is moved between its forward and withdrawn positions by an actuating assembly 50 (shown schematically) to obtain a first and second driving configuration of vehicle 1 respectively. Assembly 50 comprises, for each side member 13, a respective gas spring 51 housed in section 14 and in turn comprising a jacket 52 and a rod 53 connected to each other telescopically. The end of jacket 52 is fixed to section 14 by a bracket 52a and "sacrificial" screws 48 as described above, while the end of rod 53 is fixed to section 15 by a bracket 53a.

Gas spring 51 exerts elastic force on portions 15 to push front end 10 into the forward position, and provides for damping when front end 10 is pushed back by impact on bumper 16.

To move front end 10 into the maximum withdrawn position, assembly 50 comprises, for each side member 13, a respective motor 55 (shown schematically) carried by structure 8 and controlled by a central control unit 56 (shown schematically); and a respective cable 57 which defines a flexible tie fixed at one end to cross member 12 and controlled at the other end by motor 55.

With reference to Figures 3 and 4, vehicle 1 comprises, for each side member 13, a respective stop device 60 for arresting section 15 in an intermediate position between the forward and withdrawn positions, as front end 10 is pushed back from the forward position by front impact on bumper 16.

Device 60 comprises a stop flange 61 fixed to the front end of portion 14; and two triggers or stop teeth 62, which extend through respective opposite lateral slots 63 in section 15, are hinged to section 15 about respective vertical axes, and are rotated by an actuating assembly 64 (shown schematically) between a stop position, in which they project from slots 63 and face flange 61 in direction 11, and a release position (not shown), in which they are housed inside section 15 to allow section 15 to move back freely. Assembly 64 comprises an elastic device 66 which pushes the two triggers 62 into the stop position; and an actuating device 67 for moving triggers 62 into the release position automatically as sections 15 are withdrawn by motor 55.

Device 67 comprises motor 55; and a rack-and-pinion transmission 68 which is activated directly by cable 57 so as to be synchronized with control of cross member 12, and in turn comprises a pinion 70 coaxial and integral with trigger 62, and a rack 71 connected integrally to cable 57 and meshing with pinion 70.

In actual use, motor 55 is controlled by central control unit 56 on the basis of various driving parameters, e.g. speed, to vary the configuration of vehicle 1 selectively. More specifically, vehicle 1 is set to the first driving configuration at relatively low speed, and to the second driving configuration at relatively high speed.

To obtain the second driving configuration, central control unit 56 commands motor 55 to draw in cable 57 and, therefore, cross member 12. Over a first travel portion A equal to the distance between flanges 61 and triggers 62, transmission 68, operated by motor 55, rotates triggers 62 into the respective release positions to avoid contacting flanges 61. Over a second travel portion B equal to the distance between triggers 62 and cross member 12, triggers 62 remain inside sections 15, without touching the inner surface of sections 14, until front end 10 reaches the maximum withdrawn position, in which it is locked by triggers 62 engaging respective retaining slots (not shown) formed in sections 14.

Conversely, to obtain the first driving configuration, triggers 62 must be released by driver control from the passenger compartment, e.g. by means of an electric control, to allow springs 51 to extend and so move sections 15 into the maximum forward position.

With reference to Figure 4, as of the forward position shown, front end 10, in the event of a head-on collision of vehicle 1, can withdraw freely with respect to structure 8 along said travel portion A until triggers 62 contact flanges 61.

Preferably, travel portion A equals 65 millimetres, and bumper 16 encounters a withdrawal resistance of about 2500 newtons due to the action of gas springs 51. The travel and withdrawal resistance values are predetermined so as to damp any front impact against a pedestrian. In the event of this, the pedestrian, on being struck by bumper 16, is normally thrown against bonnet 18, which damps the impact by deforming substantially freely by being distanced from the engine and other component parts housed in compartment 2 when front end 10 is in the forward position.

In the event of a head-on collision involving impact greater than that normally encountered in collisions with pedestrians, bumper 16 moves along the next travel portion B equal to about 80 mm, and along which triggers 62 remain stationary against flanges 61, while sections 15 and cross member 12 undergo programmed permanent deformation to subject bumper 16 to a withdrawal resistance of about 100,000 newtons.

In the event of impact at even higher speed, as cross member 12 comes to rest against flanges 61 at the end of travel portion B, sections 14 of side members 13 also begin to undergo permanent deformation, while screws 48 shear off to disconnect springs 51 and guides 43 automatically from sections 14.

Vehicle 1 therefore provides for a high degree of safety in the event of front impact against pedestrians, by bonnet 18 forming part of movable front end 10, and so being distanced from the engine and other component parts housed in compartment 2 when front end 10 is in the forward position. That is, the gap between bonnet 18 and the component parts housed inside compartment 2 enables bonnet 18 to deform substantially freely and so effectively damp impact by the pedestrian. Shock absorption is also further improved by the particular design of bonnet 18 and provision of layer 22.

Moreover, the load level along travel portion A is designed to reduce stress on the lower limbs of the pedestrian, thus reducing the risk of injury to the shin and knee.

The fact that front end 10 also comprises portions 6 of fenders 4, and the particular design of fenders 4 themselves, provide for very little difference in the look of vehicle 1 in the two different driving configurations.

Devices 24, 34 and 40 provide for guiding substantially all the component parts of front end 10 between the withdrawn and forward positions, while guides 43 cooperate in guiding cross member 12 to prevent jamming of telescopic coupling 41 between sections 14 and 15.

Stop device 60 provides for obtaining a first travel portion A in which front end 10 slides substantially freely, and a second travel portion B in which sections 15 undergo programmed deformation in the event of impact.

Device 60 is also relatively straightforward, by withdrawal of triggers 62 in the release position being controlled synchronously by the same motor 55 withdrawing front end 10.

Moreover, the transmission defined by flexible cable 57 has no effect on withdrawal of front end 10 in the event of impact, while screws 48 provide for automatically disconnecting guides 43 and springs 51 in the event of longitudinal stress over and above a predetermined threshold value.

Clearly, changes may be made to vehicle 1 as described with reference to the accompanying drawings without, however, departing from the scope of the present invention.

In particular, side members 13 need not be telescopic; and triggers 62 may be carried by sections 14, as opposed to sections 15, and/or may be replaced by other stop members, e.g. linear as opposed to rotary.

The actuators and transmissions controlling triggers 62 and front end 10 may differ from those described and illustrated, e.g. may be separate, and may be controlled separately and synchronously. In particular, springs 51 and device 66 may be replaced by powered members for pushing triggers 62 and cross member 12 into the stop position and forward position respectively, and/or dampers other than or in addition to gas springs 51 may be provided. Finally, assembly 50 may comprise one motor for controlling the two ties or Bowden cables 57 associated with respective side members 13.

## Claims

1. A coupling assembly (23, 50, 60, 64) for connecting a movable front portion (10) to a fixed structure (8) of a vehicle (1); the assembly comprising:
- first shock-absorbing means (51) exerting a first resistance to withdrawal along a first withdrawal travel portion (A) of said front portion (10) in a longitudinal direction (11) with respect to said fixed structure (8);
- second shock-absorbing means (15, 12) exerting a second resistance to withdrawal, greater than said first resistance, along a second withdrawal travel portion (B) of said front portion (10) following said first travel portion (A);
- two longitudinal side members (13) comprising respective rear sections (14) connected to said
- fixed structure (8), and respective front sections (15) connected integrally to a supporting cross member (12) of said front portion (10) and movable with respect to said rear sections (14);
- guide means (40) interposed between said rear sections (14) and said front sections (15) to guide said supporting cross member (12) longitudinally;
- stop means (60) to arrest longitudinal slide of said front sections (15) in an intermediate position between said first (A) and said second (B) travel portion, during said withdrawal; said stop means (60) comprising, for each said side member (13), an arresting member (61) carried by one of said front section (15) and said rear section (14), and a stop member (62) carried by the other of said front section (15) and said rear section (14);
**characterized in that** said stop member (62) is movable between a stop position facing said arresting member (61) in said longitudinal direction (11), and a release position allowing said front section (15) to withdraw freely; first actuating means (64) being provided to move said stop member (62) between the stop and release positions.

2. An assembly as claimed in Claim 1, **characterized in that** said first shock-absorbing means (51) are elastically deformable, and **in that** said second shock-absorbing means (12, 15) are permanently deformable.

3. An assembly as claimed in Claim 1 or 2, **characterized in that** said guide means (40) comprise telescopic coupling means (41) between said rear sections (14) and said front sections (15).

4. An assembly as claimed in Claim 3, **characterized in that** said guide means (40) comprise two additional guides (43), each connected to a relative side member (13) in parallel with said telescopic coupling means (41).

5. An assembly as claimed in Claim 4, **characterized by** comprising fastening means (48) for connecting said additional guides (43) to said side members (13); said fastening means (48) yielding when a stress in a longitudinal direction (11) exceeds a predetermined threshold value.

6. An assembly as claimed in anyone of the preceding Claims, **characterized in that** said first actuating means (64) comprise first elastic means (66) to push said stop member (62) into the stop position; and a first motor (55) to move said stop member (62) into the release position in opposition to said first elastic means (66).

7. An assembly as claimed in any one of the preceding Claims, **characterized in that** said second shock-absorbing means (15, 12) comprise said front sections (15).

8. An assembly as claimed in Claim 7, **characterized in that** said second shock-absorbing means (15, 12) comprise said supporting cross member (12).

9. An assembly as claimed in Claim 2, **characterized in that** said first shock-absorbing means comprise two gas springs (51).

10. An assembly as claimed in any one of the preceding Claims, **characterized by** also comprising second actuating means (50) controllable to move said front portion (10) between said forward position and said withdrawn position to obtain a first and a second driving configuration of said vehicle (1) respectively.

11. An assembly as claimed in Claim 10, **characterized in that** said second actuating means (50) comprise second elastic means (51) to push said front portion (10) into said forward position; said second elastic means and said first shock-absorbing means being defined by the same members (51).

12. An assembly as claimed in Claim 10 or 11, **characterized in that** said first and second actuating means comprise, for each said side member (13):
- a single motor (55) in common; and
- a first (68) and, respectively, a second (57) transmission activated by said single motor (55) and synchronized with each other.

13. An assembly as claimed in Claim 12, **characterized in that** said first transmission (68) is interposed between said second transmission (57) and said stop member (62), and is activated by said second transmission (57).

14. An assembly as claimed in Claim 13, **characterized in that** said second transmission (57) comprises a longitudinal tie (57) fixed to said supporting cross member (12) and drawn by said single motor (55); said first transmission (68) comprising a pinion (70) carried by said stop member (62), and a rack (71) carried by said tie (57) and meshing with said pinion (70).

15. An assembly as claimed in Claim 14, **characterized in that** said tie is defined by a flexible cable (57).

## Patentansprüche

1. Kupplungsanordnung (23, 50, 60, 64) zum Verbinden eines bewegbaren vorderen Abschnitts (10) mit einer ortsfesten Struktur (8) eines Fahrzeuges (1); wobei die Anordnung aufweist:
- erste stoßabsorbierende Mittel (51), die einen ersten Widerstand gegen Zurückziehen entlang eines ersten Rückzugsbewegungsabschnitts (A) des vorderen Abschnitts (10) in einer Längsrichtung (11) in Bezug auf die ortsfeste Struktur (8) ausüben;
- zweite stoßabsorbierende Mittel (15, 12), die einen zweiten Widerstand gegen Zurückziehen, der größer als der erste Widerstand ist, entlang eines zweiten Rückzugsbewegungsabschnitts (B) des vorderen Abschnitts (10) ausüben, der sich an den ersten Bewegungsabschnitt (A) anschließt;
- zwei Längsseitenteile (13), die jeweilige hintere Abschnitte (14), die mit der ortsfesten Struktur (8) verbunden sind, und jeweilige vordere Abschnitte (15) aufweisen, die einstückig mit einem Stützquerträger (12) des vorderen Abschnitts (10) verbunden und in Bezug auf die hinteren Abschnitte (14) bewegbar sind;
- Führungsmittel (40), die zwischen den hinteren Abschnitten (14) und den vorderen Abschnitten (15) angeordnet sind, um den Stützquerträger (12) längs zu führen;
- Anschlagmittel (60) zum Arretieren der Längsverschiebung der vorderen Abschnitte (15) in einer Zwischenposition zwischen dem ersten (A) und dem zweiten (B) Bewegungsabschnitt während des Zurückziehens; wobei die Anschlagmittel (60) für jedes Seitenteil (13) ein Arretierungselement (61), das von einem von dem vorderen Abschnitt (15) und dem hinteren Abschnitt (14) getragen wird, und ein Anschlagelement (62) aufweisen, das von dem anderen von dem vorderen Abschnitt (15) und dem hinteren Abschnitt (14) getragen wird;
**dadurch gekennzeichnet, dass** das Anschlagelement (62) zwischen einer Anschlagposition, die dem Arretierungselement (61) in der Längsrichtung (11) zugewandt ist, und einer Freigabeposition bewegbar ist, die ein freies Zurückziehen des vorderen Abschnitts (15) ermöglicht; wobei erste Betätigungsmittel (64) vorgesehen sind, um das Anschlagelement (62) zwischen der Anschlag- und Freigabeposition zu bewegen.

2. Anordnung nach Anspruch 1, **dadurch gekennzeichnet, dass** die ersten stoßabsorbierenden Mittel (51) elastisch verformbar sind, und dass die zweiten stoßabsorbierenden Mittel (12, 15) permanent verformbar sind.

3. Anordnung nach Anspruch 1 oder 2, **dadurch gekennzeichnet, dass** die Führungsmittel (40) teleskopische Kupplungsmittel (41) zwischen den hinteren Abschnitten (14) und den vorderen Abschnitten 815) aufweisen.

4. Anordnung nach Anspruch 3, **dadurch gekennzeichnet, dass** die Führungsmittel (40) zwei zusätzliche Führungen (43) aufweisen, die jeweils mit einem jeweiligen Seitenteil (13) parallel zu den teleskopischen Kupplungsmitteln (41) verbunden sind.

5. Anordnung nach Anspruch 4, **dadurch gekennzeichnet, dass** sie Befestigungsmittel (48) zum Verbinden der zusätzlichen Führungen (43) mit den Seitenteilen (13) aufweist; wobei die Befestigungsmittel (48) nachgeben, wenn eine Belastung in einer Längsrichtung (11) einen vorbestimmten Grenzwert überschreitet.

6. Anordnung nach einem der vorhergehenden Ansprüche, **dadurch gekennzeichnet, dass** die ersten Betätigungsmittel (64) erste Federmittel (66) zum Drücken des Anschlagelements (62) in die Anschlagposition; und einen ersten Motor (55) zum Bewegen des Anschlagelements (62) in die Freigabeposition entgegengesetzt zu den ersten Federmitteln (66) aufweisen.

7. Anordnung nach einem der vorhergehenden Ansprüche, **dadurch gekennzeichnet, dass** die zweiten stoßabsorbierenden Mittel (15, 12) die vorderen Abschnitte (15) aufweisen.

8. Anordnung nach Anspruch 7, **dadurch gekennzeichnet, dass** die zweiten stoßabsorbierenden Mittel (15, 12) den Stützquerträger (12) aufweisen.

9. Anordnung nach Anspruch 2, **dadurch gekennzeichnet, dass** die ersten stoßabsorbierenden Mittel zwei Gasfedern (51) aufweisen.

10. Anordnung nach einem der vorhergehenden Ansprüche, **dadurch gekennzeichnet, dass** sie auch zweite Betätigungsmittel (50) aufweist, die steuerbar sind, um den vorderen Abschnitt (10) zwischen der Voranposition und der Rückzugsposition zu bewegen, um eine erste bzw, eine zweite Antriebskonfiguration des Fahrzeuges (1) zu erreichen.

11. Anordnung nach Anspruch 10, **dadurch gekennzeichnet, dass** die zweiten Betätigungsmittel (50) zweite Federmittel (51) aufweisen, um den vorderen Abschnitt (10) in die Voranposition zu drücken; wobei die zweiten Federmittel und die ersten stoßabsorbierenden Mittel durch dieselben Elemente (51) definiert sind.

12. Anordnung nach Anspruch 10 oder 11, **dadurch gekennzeichnet, dass** die ersten und zweiten Betätigungsmittel für jedes Seitenteil (13) aufweisen:
- einen einzigen gemeinsamen Motor (55); und
- ein erstes (68) bzw. ein zweites (57) Getriebe, die von dem einzigen Motor (55) betätigt werden und miteinander synchronisiert sind.

13. Anordnung nach Anspruch 12, **dadurch gekennzeichnet, dass** das erste Getriebe (68) zwischen dem zweiten Getriebe (57) und dem Anschlagelement (62) angeordnet ist und von dem zweiten Getriebe (57) betätigt wird.

14. Anordnung nach Anspruch 13, **dadurch gekennzeichnet, dass** das zweite Getriebe (57) ein Längsbindeglied (57) aufweist, das an dem Stützquerträger (12) befestigt ist und von dem einzigen Motor (55) gezogen wird; wobei das erste Getriebe (68) ein Ritzel (70), das von dem Anschlagelement (62) getragen wird, und eine Zahnstange (71) aufweist, die von dem Bindeglied (57) getragen wird und mit dem Ritzel (70) in Eingriff steht.

15. Anordnung nach Anspruch 14, **dadurch gekennzeichnet, dass** das Bindeglied durch ein flexibles Seil (57) definiert ist.

## Revendications

1. Ensemble de couplage (23, 50, 60, 64) pour raccorder une partie avant mobile (10) à une structure fixe (8) d'un véhicule (1) ; l'ensemble comprenant :
des premiers moyens d'amortissement (51) exerçant une première résistance au retrait le long d'une première partie de déplacement de retrait (A) de ladite partie avant (10) dans une direction longitudinale (11) par rapport à ladite surface fixe (8) ;
des seconds moyens d'amortissement (15, 12) exerçant une seconde résistance au retrait, supérieure à ladite première résistance, le long d'une seconde partie de déplacement de retrait (B) de ladite partie avant (10) suivant ladite première partie de déplacement (A);
deux éléments latéraux longitudinaux (13) comprenant des sections arrière (14) respectives raccordées à ladite structure fixe (8), et des sections avant (15) respectives raccordées intégralement à un élément transversal de support (12) de ladite partie avant (10) et mobiles par rapport auxdites sections arrière (14) ;
des moyens de guidage (40) interposés entre lesdites sections arrière (14) et lesdites sections avant (15) pour guider ledit élément transversal de support (12) de manière longitudinale ;
des moyens de butée (60) pour arrêter le coulissement longitudinal desdites sections avant (15) dans une position intermédiaire entre ladite première (A) et ladite seconde (B) partie de déplacement, pendant ledit retrait ; lesdits moyens de butée (60) comprenant, pour chacun desdits éléments latéraux (13), un élément d'arrêt (61) supporté par l'une parmi ladite section avant (15) et ladite section arrière (14), et un élément de butée (62) supporté par l'autre parmi ladite section avant (15) et ladite section arrière (14) ;
**caractérisé en ce que** ledit élément de butée (62) est mobile entre une position de butée faisant face audit élément d'arrêt (61) dans ladite direction longitudinale (11) et une position de déblocage permettant à ladite section avant (15) d'être retirée librement ; des premiers moyens d'actionnement (64) étant prévus pour déplacer ledit élément de butée (62) entre les positions de butée et de déblocage.

2. Ensemble selon la revendication 1, **caractérisé en ce que** lesdits premiers moyens d'amortissement (51) sont élastiquement déformables et **en ce que** lesdits seconds moyens d'amortissement (12, 15) sont déformables de manière permanente.

3. Ensemble selon la revendication 1 ou 2, **caractérisé en ce que** lesdits moyens de guidage (40) comprennent des moyens de couplage télescopiques (41) entre lesdites sections arrière (14) et lesdites sections avant (15).

4. Ensemble selon la revendication 3, **caractérisé en ce que** lesdits moyens de guidage (40) comprennent deux guides supplémentaires (43), chacun raccordé à un élément latéral (13) relatif parallèlement auxdits moyens de couplage télescopiques (41).

5. Ensemble selon la revendication 4, **caractérisé en ce qu'**il comprend des moyens de fixation (48) pour raccorder lesdits guides supplémentaires (43) auxdits éléments latéraux (13) ; lesdits moyens de fixation (48) cédant lorsqu'une tension dans la direction longitudinale (11) dépasse une valeur de seuil prédéterminée.

6. Ensemble selon l'une quelconque des revendications précédentes, **caractérisé en ce que** lesdits premiers moyens d'actionnement (64) comprennent des premiers moyens élastiques (66) pour pousser ledit élément de butée (62) dans la position de butée ; et un premier moteur (55) pour déplacer ledit élément de butée (62) dans la position de déblocage en opposition auxdits premiers moyens élastiques (66).

7. Ensemble selon l'une quelconque des revendications précédentes, **caractérisé en ce que** lesdits seconds moyens d'amortissement (15, 12) comprennent lesdites sections avant (15).

8. Ensemble selon la revendication 7, **caractérisé en ce que** lesdits seconds moyens d'amortissement (15, 12) comprennent ledit élément transversal de support (12).

9. Ensemble selon la revendication 2, **caractérisé en ce que** lesdits premiers moyens d'amortissement comprennent deux ressorts à gaz (51).

10. Ensemble selon l'une quelconque des revendications précédentes, **caractérisé en ce qu'**il comprend également des seconds moyens d'actionnement (50) pouvant être commandés pour déplacer ladite partie avant (10) entre ladite position avant et ladite position retirée pour obtenir une première et une seconde configuration d'entraînement dudit véhicule (1) respectivement.

11. Ensemble selon la revendication 10, **caractérisé en ce que** lesdits seconds moyens d'actionnement (50) comprennent des seconds moyens élastiques (51) pour pousser ladite partie avant (10) dans ladite position vers l'avant ; lesdits seconds moyens élastiques et lesdits premiers moyens d'amortissement étant définis par les mêmes éléments (51).

12. Ensemble selon la revendication 10 ou 11, **caractérisé en ce que** lesdits premiers et lesdits seconds moyens d'actionnement comprennent, pour chacun desdits éléments latéraux (13) :
un seul moteur (55) en commun ; et
une première (68) et, respectivement, une seconde (57) transmission activées par ledit moteur (55) unique et synchronisées l'une par rapport à l'autre.

13. Ensemble selon la revendication 12, **caractérisé en ce que** ladite première transmission (68) est interposée entre ladite seconde transmission (57) et ledit élément de butée (62), et est actionnée par ladite seconde transmission (57).

14. Ensemble selon la revendication 13, **caractérisé en ce que** ladite seconde transmission (57) comprend une traverse longitudinale (57) fixée sur ledit élément transversal de support (12) et tirée par ledit moteur (55) unique ; ladite première transmission (68) comprenant un pignon (70) supporté par ledit élément de butée (62) et une crémaillère (71) supportée par ladite traverse (57) et s'engrenant avec ledit pignon (70).

15. Ensemble selon la revendication 14, **caractérisé en ce que** ladite traverse est définie par un câble flexible (57).
